Europäisches Patentamt

European Patent Office

Office européen des brevets

(19)

(11)  **EP 1 260 266 A1**

(12)  **EUROPEAN PATENT APPLICATION**
published in accordance with Art. 158(3) EPC

(43) Date of publication:
**27.11.2002  Bulletin 2002/48**

(51) Int Cl.⁷: **B01J 19/00**, B01J 19/10,
C10G 7/00, C10G 7/02,
B01D 3/14

(21) Application number: **00925768.4**

(22) Date of filing: **22.03.2000**

(86) International application number:
**PCT/RU00/00097**

(87) International publication number:
**WO 01/058582 (16.08.2001 Gazette 2001/33)**

(84) Designated Contracting States:
**AT BE CH CY DE DK ES FI FR GB GR IE IT LI LU
MC NL PT SE**

(30) Priority: **14.02.2000  RU 2000103658**

(71) Applicant: **Selivanov, Nikolai Ivanovich
Ekaterinburg, 620027 (RU)**

(72) Inventor: **Selivanov, Nikolai Ivanovich
Ekaterinburg, 620027 (RU)**

(74) Representative: **Schwabe - Sandmair - Marx
Stuntzstrasse 16
81677 München (DE)**

(54)  **METHOD AND DEVICE FOR RESONANCE EXCITATION OF FLUIDS AND METHOD AND
DEVICE FOR FRACTIONATING HYDROCARBON LIQUIDS**

(57)      The present invention relates to the technology of industrial processing of primarily hydrocarbon liquids and is particularly concerned with a method and a device for their resonant excitation, as well as with a method and a plant for their fractionation.

The method of resonant excitation of liquid includes the transfer of the energy of mechanical oscillations thereto with the help of a source placed into the liquid and operating on one of the basic frequencies, abiding by the common relationship

$F = F_1 N^{-1/2}$, where $N \geq 1$ - the selected integer and

$F_1 = 63.992420$ [kHz] - the basic oscillation frequency at $N = 1$.

With the use of a rotary hydrodynamic source of oscillations resonant excitation of liquid is effected, abiding by the relationship

$$n R = 1.16141 F,$$

where

**n** [1/s] - the rotation frequency of the working wheel,
**R** [m] - the radius of the peripheral surface of the working wheel.

A device for resonant excitation of liquid comprises a rotor with the working wheel, made as a disc and an annular wall with a series of outlet openings, and a stator with the intake opening, communicating with the cavity of the working wheel and a coaxial wall forming with the working wheel an annular chamber, communicating with the discharge opening. At that

$$R = 2.8477729 \, n^{-2/3} \cdot 10^4 \text{ [mm]},$$

while the value of the internal radius of the coaxial wall constitutes

$$R_1 = R + B \, S \, (2 \, \pi)^{-1} \text{ [mm]},$$

where

$B \geq 1$ - the selected integer,
$S = 7.2973531$ [mm] - the pitch of outlet openings of the working wheel.

A method of fractionation of liquid includes preliminary treatment thereof with the help of the above-described pre-installed device for resonant excitation, the supply of the preliminarily treated liquid into a fractionating tower and the discharge of distilled fractions and residual fraction. The preliminary treatment is applied preferably to a partial flow of liquid diverted from the main flow.

A plant for fractionation of liquid comprises a feeding pump, at least one fractionating tower and the above-described pre-installed device for resonant excitation, sequentially installed between the feeding pump outlet and the fractionating pump inlet. Shut-off-control elements are provided for diverting of the partial flow of liquid and combining thereof with the general flow following the preliminary treatment.

FIG. 1

## EP 1 260 266 A1

### Description

THE FIELD OF THE INVENTION

The invention relates to the technology of processing of liquids, having in their composition bonded hydrogen, and is directly concerned with a method and a device for resonant excitation of liquids and a method and a plant for fractionation of hydrocarbon liquids. The practical field of the industrial application of the invention covers the oil refining, chemical and other branches of industry, associated with technological processing of liquids, having in their composition bonded hydrogen, primarily of hydrocarbon liquids, such as gas distillate, crude oil, intermediate products and products of oil refining, etc.

DESCRIPTION OF THE PRIOR ART

From the state of the art the methods of acoustic excitation of liquids are generally known for solving of various technological problems. These methods comprise the transfer of oscillatory energy to the liquid with the help of a source of mechanical oscillations placed into the liquid, in whose capacity can be used widely known in the technology mechanical, electromechanical, magnetostrictive, piezoelectric, hydrodynamic and other acoustic emitters. In particular, from the International Application **PCT/RU92/00195** the rotary-type hydrodynamic acoustic emitter (ultrasonic activator) is known, which can be used in the process of preliminary treatment of liquids for destructive transformation of their chemical bonds at the molecular level.

These known methods and means of acoustic excitation of liquids, as applied to destructive transformation of their chemical bonds, possess a common disadvantage, consisting in that they do not provide criteria for the selection of definite resonant frequencies, which fact can sharply reduce the efficiency of the preliminary acoustic treatment of liquids.

From the International Application **PCT/RU92/00194** the method and device are also known for preliminary treatment and fractionation of hydrocarbon liquids with the help of the rotary-type hydrodynamic acoustic emitter. The method of the preliminary treatment of liquids comprises consecutive supply of liquid into the cavities of several blade-type working wheels, discharge of liquid from the cavity of each working wheel into the cavity of the stator through the outlet openings of the working wheels and straight-through openings of the stator. In this case the peripheral surface of the working wheels has the minimum clearance with respect to the stator. The flows of liquid running out of the outlet openings of the working wheels undergo sharp periodical interruptions, which induce mechanical oscillations of audio frequency in the liquid. The device for preliminary treatment of liquids comprises the rotor, including the shaft resting on bearings and several blade-type working wheels installed on the shaft. Each of them is made as a disc with the peripheral annular wall, in which a series of outlet openings evenly spaced along the circumference, is made for liquid. The device comprises the stator, having intake and discharge openings for liquid and coaxial walls, bearing against the annular peripheral wall of each working wheel with the minimum technically attained clearance, at that a series of straight-through openings for liquid being made in each of the coaxial walls. The device for fractionation of hydrocarbon liquids is ganged up with the device for preliminary treatment of liquids and comprises the chamber conjugated with the last working wheel for separation of the treated liquid into the liquid and vaporous phases, and the chamber for condensation of the vaporous phase, communicating with the former chamber.

The described method and device for preliminary treatment of hydrocarbon liquids do not allow, however, the potentialities of such treatment to be realized to the maximum extent for more efficient fractionation of the treated liquid, since here the selection of the optimum relationship between decisive working parameters, such as the radius of the peripheral surface of the working wheel and the rotation frequency thereof is left without attention.

From the International Application **PCT/RU95/00071** there are also known the method and device for conditioning of hydrocarbon liquids with the help of the rotary-type hydrodynamic source of mechanical oscillations. The method includes the supply of liquid into the cavity of the working wheel rotating inside the stator, the discharge of liquid from the cavity of the working wheel through a series of outlet openings, evenly spaced along the circumference, into the annular chamber, limited by the peripheral surface of the working wheel and the inner coaxial surface of the stator, and the discharge of liquid from the annular chamber. The discharge of liquid from the annular chamber is effected preferably into the collecting chamber of the stator through a series of straight-through openings, evenly spaced along the inner coaxial surface of the stator, the openings being consecutively arranged opposite to the outlet openings of the working wheel during rotation thereof. In this case the nominal value of the radius **R** of the peripheral surface of the working wheel and the nominal rotation frequency n thereof are preset depending on the selected quantity **K** of the outlet openings thereof according to the following empirical relationships:

$$R = 1.1614 \ K \ [mm],$$

$$n = 3.8396\, K^{-3/2} \cdot 10^6 \ [r.p.m.].$$

The device comprises the rotor, including the shaft resting on bearings and at least one working wheel installed on the shaft. The working wheel is made as a disc with the peripheral annular wall, in which a series of outlet openings, evenly spaced along the circumference, is made for liquid. The stator has the wall coaxial to the working wheel, the intake opening for the supply of liquid, communicating with the working wheel cavity, and the discharge opening for liquid outflow. The annular chamber is provided, formed by the stator coaxial wall and peripheral annular wall of the working wheel, communicating with the stator discharge opening. The stator has preferably the collecting chamber, communicating on one side with the discharge opening thereof, and on the other side with the annular chamber through a series of straight-through openings, evenly spaced along the circumference, made in the stator coaxial wall. A means is provided for driving the rotor with the preset rotation frequency.

In the described method and device for conditioning of hydrocarbon liquids a resultant attempt was undertaken for the selection of the optimum relationship between the decisive working parameters, such as the radius of the peripheral surface of the working wheel and the rotation frequency thereof. However, the potentialities of such preliminary treatment of hydrocarbon liquids for their most efficient successive fractionation remain still unexhausted.

From the state of the art there is also commonly known the method of fractionation of hydrocarbon liquids by way of distillation, including preliminary treatment of the liquid being fractionated according to, for example, the method of the above-mentioned International Application **PCT/RU95/00071**, the supply of preliminarily treated liquid into the fractionating tower and the discharge of distilled and residual fractions.

From the state of the art are also generally known the plants for fractionation of hydrocarbon liquids by way of distillation, comprising the feeding pump and at least one fractionating tower interconnected by pipelines. It is also known, for example, from the above-mentioned International Application **PCT/RU95/00071,** that the pre-installed hydrodynamic device intended for preliminary treatment of the liquid being fractionated is used in such plants.

Such methods and plants for fractionation of hydrocarbon liquids with the use of the pre-installed rotary hydrodynamic device for their preliminary treatment make it possible to increase the yield of the most valuable light fractions. However, in practice the potentialities of such technology fail to be realized to the maximum extent. The reason for this seems to be responsible both inadequate efficiency of the inherent rotary hydrodynamic device for preliminary treatment of liquid, and insufficiently rational building-in of this device into traditional schemes of plants for fractionation of hydrocarbon liquids.

THE OBJECT AND ESSENCE OF THE INVENTION

The purpose of this invention is to provide such a method and a device for resonant excitation of liquids, having in their composition chemically bonded hydrogen, primarily of hydrogen liquids, as well as such a method and a plant for their fractionation, which make it possible to increase the efficiency of preliminary treatment of liquid to the maximum, thus respectively to influence positively the efficiency of subsequent fractionation in respect of the maximum increase of the yield of the most valuable light fractions.

The stated problem is solved by that in the proposed method of resonant excitation of liquids, having in their composition bonded hydrogen, which as the known methods is effected by means of oscillatory influence on liquid for destructive transformation of the chemical bonds thereof at the molecular level and includes the transfer of oscillatory energy to liquid with the help of a source of mechanical oscillations placed into the liquid, *according to the principal embodiment of the method,* resonant excitation of liquid is executed on one of the basic frequencies obeying the common relationship

$$F = F_1 N^{-1/2}, \tag{1}$$

where

$N \geq 1$ - the selected integer,
$F_1$ **= 63.992420** [kHz] - the basic oscillation frequency at **N = 1.**

In the described method of resonant excitation, as applied to hydrocarbon liquids, executed along with the known methods, with the help of the rotary hydrodynamic source of mechanical oscillations and including the supply of the liquid being treated into the cavity of the working wheel, rotating inside the stator, the discharge of liquid from the cavity of the working wheel through a series of outlet openings, evenly spaced along the peripheral surface thereof, into the annular chamber, limited by the peripheral surface of the working wheel and inner coaxial surface of the stator, and the outflow of liquid from the annular chamber, *according to a particular case of embodiment of the method,* resonant excitation of liquid is effected abiding by relationship

$$n R = 1.16141 F, \qquad (2)$$

where

**n** [1/s] - the rotation frequency of the working wheel,
**R** [m] - the radius of the peripheral surface of the working wheel.

At such relationship of said parameters there is achieved, as has been confirmed experimentally, the efficient resonant treatment of hydrocarbon liquids effecting such destructive transformation of the chemical bonds of liquid at the molecular level and respectively such influence on its physical-chemical properties, which during subsequent fractionation predetermines a substantial increase of the yield of highly valuable light fractions. This effect can be explained by the influence of oscillatory excitation of liquid in the resonant duty daring simultaneous circular movement thereof at the definite velocity along the corresponding definite radius.

At the definite value of the radius **R** of the working wheel and actual rotation frequency thereof $\mathbf{n}_N = 3.8395452 (N \pm 7)^{-3/2} \cdot 10^6$ (approximately $\pm$ 10% for N = 100...200) there is further sufficient increase of the efficiency of resonant treatment of liquid, as compared with the level, characteristic of the above-described analogs. However, *in the preferred embodiment of the method* it is advantageous to maintain the calculated rotation frequency of the working wheel with a deviation of $\pm$ 1%, thus achieving the most efficient resonant treatment of liquid.

The posed problem is simultaneously solved with the help of a proposed device for resonant treatment of hydrocarbon liquids, which makes it possible to realize the above-described method of resonant treatment of hydrocarbon liquids in the scope of the unified inventive concept. This device, as the known ones, comprises

· a rotor including a shaft resting on bearings and at least one working wheel installed on the shaft, at that

· the working wheel is made as a disc with a peripheral annular wall, wherein a series of outlet openings, evenly spaced along the circumference, is made for liquid,

· a stator having a wall coaxial to the working wheel, an intake opening for the supply of liquid, communicating with the working wheel cavity, and a discharge opening for liquid outflow,

· an annular chamber formed by the coaxial wall of the stator and peripheral annular wall of the working wheel and communicated with the stator discharge opening, and

· a means for driving the rotor at the preset rotation frequency.

*According to the principal embodiment of the device,* the value of the external radius of the peripheral annular wall of the working wheel constitutes

$$R = 2.8477729\, n^{-2/3} \cdot 10^4\ [mm], \qquad (3)$$

where

**n = 14.651908 F$^3$** [r.p.m.] - the rotation frequency of the working wheel,
**F = 63.992420 N$^{-1/2}$** [kHz] - the basic frequency of resonant excitation,
**N $\geq$ 1** - the selected integer,

while the value of the internal radius of the stator coaxial wall constitutes

$$R_1 = R + B S (2\pi)^{-1}\ [mm], \qquad (4)$$

where

B $\geq$ 1 - the selected integer,

S = 7.2973531 [mm] - the pitch of outlet openings of the working wheel along the circumference of the radius R.

*According to preferred, embodiment of the device,* it is advantageous to select the radial extent of the working wheel outlet openings multiple or *more preferably* equal to value $S(2\pi)^{-1}$.

*According to the* most *preferred embodiment of the device* the means for driving the rotor comprises a system for controlling the rotation frequency thereof with a deviation of $\pm1\%$ from its calculated value.

The posed problem is simultaneously solved with the help of a proposed method of fractionation of hydrocarbon liquids, which makes it possible to realize the above-described method of resonant treatment of hydrocarbon liquids in the scope of the unified inventive concept. This method, as the known ones, is executed by way of distillation and includes preliminary treatment of liquid with the help of a pre-installed rotary hydrodynamic source of mechanical oscillations, the supply of preliminary treated liquid into the fractionating tower and the discharge of distilled fractions and residual fraction. *According to the principal embodiment of the method of fractionation,* liquid is preliminarily treated by resonant excitation thereof in compliance with the above-described proposed method of resonant excitation of hydrocarbon liquids.

*According to the preferred embodiment of the method of fractionation,* from the general flow of liquid to be fractionated a partial flow is diverted and subjected to said preliminary treatment, whereupon both flows are combined before feeding into the rectification tower. *According to the more preferred embodiment,* the partial flow amounts to 5...80%, the most preferred being 20...50% from the full flow.

It has been experimentally established that preliminary treatment by the proposed method of less than 5% from the full liquid flow fails as yet to achieve appreciable efficiency of resonant excitation, while preliminary treatment of more than 80% from the full liquid flow does not any longer give a substantial increase of the efficiency of such treatment.

*In the most preferred embodiment* of the method of fractionation, comprising, along with the known methods, a partial return into the fractionating tower of its own residual fraction, the returned residual fraction is subjected to preliminary treatment by way of resonant excitation, thus achieving the most efficient fractionation.

The stated problem is simultaneously solved with the aid of a proposed plant for fractionation of hydrocarbon liquids, which makes it possible to realize the above-described method of fractionation of hydrocarbon liquids in the scope of the unified inventive concept. This plant, as the known ones, comprises a feeding pump, at least one fractionating tower and a pre-installed rotary hydrodynamic device for preliminary treatment of liquid, all interconnected by pipelines. *According to the principal embodiment of the plant,* the device for preliminary treatment of liquid is made as the above-described proposed device for resonant excitation of hydrocarbon liquids and is sequentially installed between the feeding pump outlet and the fractionating tower inlet.

*According to the preferred embodiment,* the inlet of the device for resonant excitation of liquid is connected to the inlet of the fractionating tower through a shut-off-control element. *According to the more preferred embodiment,* the outlet of the device for resonant excitation of liquid is connected to the inlet of the fractionating tower through a shut-off-control element. The possibility of resonant treatment only the controlled partial flow of the liquid is ensured in this way.

*According to the most preferred embodiment,* in the plant for fractionation, comprising along with the known ones, a loop of partial return of its own residual fraction into the fractionating tower, including a feeding pump and a heating device, sequentially interconnected by pipelines, a second device for resonant excitation of liquid according to the invention is sequentially installed into the loop of partial return of residual fraction.

Other objects of the present invention will hereinafter become evident from the following detailed description and practical example of the embodiment thereof, taken in conjunction with the schematic drawings, wherein:

Fig. 1 - a device for resonant excitation of hydrocarbon liquids, longitudinal section I - I (Fig. 2);

Fig. 2 - same, cross section II - II (Fig 1);

Fig. 3 - same, cross section III - III (Fig. 1);

Fig. 4 - a simplified diagram of a plant for fractionation of hydrocarbon liquids.

VERSIONS OF EMBODIMENT OF THE INVENTION

A method of resonant excitation of liquids, having in their composition bonded hydrogen, is executed by way of oscillatory influence onto the liquid for destructive transformation of chemical bonds thereof at the molecular level and includes the transfer of oscillatory energy with the help of a source of mechanical oscillations placed into the liquid. According to the principal embodiment, resonant excitation of liquid is executed on one of the basic frequencies obeying a common relationship

$$F = F_1 \, N^{-1/2}, \tag{1}$$

where

$N \geq 1$ - the selected integer,
$F_1 = 63.992420$ [kHz] - the basic oscillation frequency at $N = 1$.

As a source of oscillations use can be made of the well known in the technology popular mechanical, electromechanical, magnetostrictive, piezoelectric, hydrodynamic and similar emitters, the above-described known rotary hydrodynamic source of mechanical oscillations inclusive. The lower boundary of the frequency range from considerations of reasonable adequacy can amount, for example, to unities of Hertz, which corresponds to the maximum values of the integer N of the order of $10^7 \ldots 10^9$.

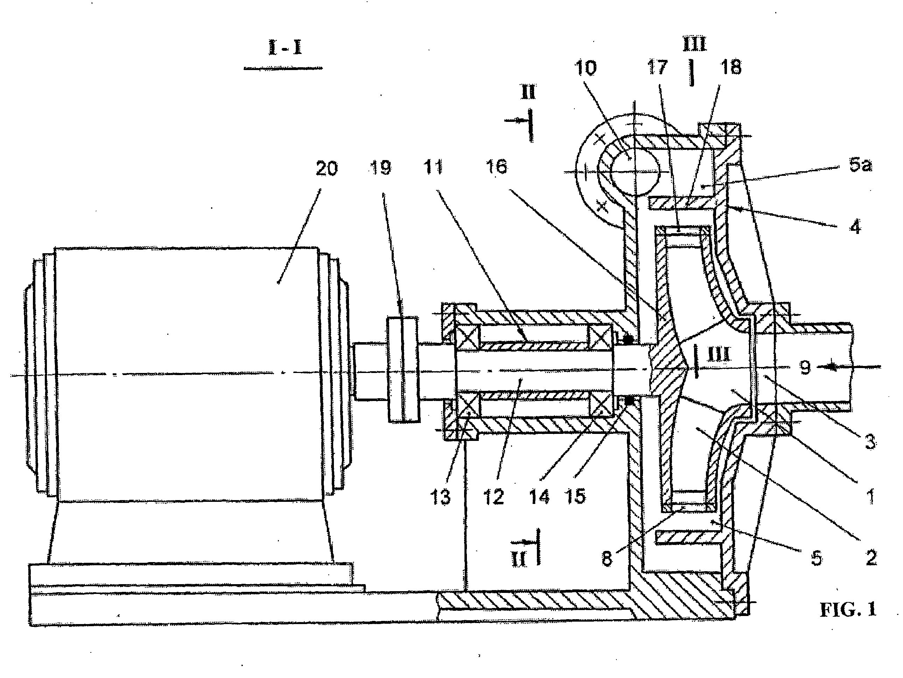

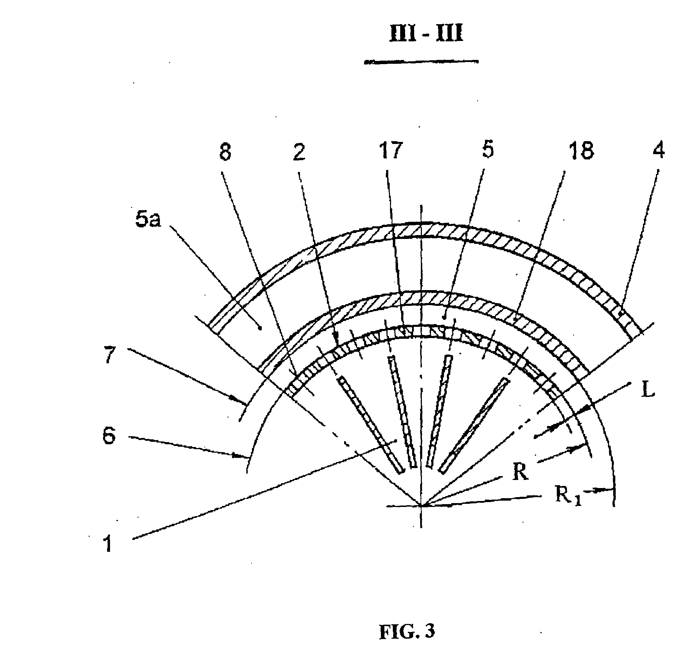

The method of resonant excitation of hydrocarbon liquids as the specific case of the above-described method of resonant excitation of liquids, having in their composition bonded hydrogen, provides for the use of a rotary hydrodynamic source of mechanical oscillations. In this case the liquid to be treated is supplied into a cavity **1** (**Fig. 1**) of a working wheel **2** through an intake opening **3** of a stator **4**. In the process of rotation of the working wheel **2** the liquid being treated is discharged from the cavity **1** thereof into an annular chamber **5**, formed by a peripheral surface **6** (**Fig. 3**) of the working wheel **2** and a subtending internal coaxial surface **7** of the stator **4**, through a series of outlet openings **8**, evenly spaced along the peripheral surface **6** of the working wheel **2**. Within the annular chamber **5** the liquid being treated continues rotating relative to the central axis **9** and undergoes in this case resonant oscillations of the audio frequency, caused by the interaction of elementary flows, running from the outlet openings **8** of the working wheel **2**, between each other and with the coaxial surface **7** of the stator **4**. The treated liquid is discharged from the annular chamber **5** through a discharge opening **10** of the stator **4**.

According to the principal embodiment of the method, the resonant excitation of hydrocarbon liquid is executed, abiding by the relationship

$$n \, R = 1.16141 \, F, \tag{2}$$

where

$n$ [1/s] - the rotation frequency of the working wheel **2,**
$R$ [m] - the radius of the peripheral surface **6** of the working wheel **2**.

The actual range of the reasonable values of the integer N is limited in this case by the considerations of the practical expediency and/or technical feasibility in respect of geometrical dimensions and rotation frequency of the working wheel **2**, taking into account the strength characteristics thereof.

In the preferred embodiment of the method of resonant excitation of hydrocarbon liquids the rotation frequency of the working wheel is maintained constant with a deviation of $\pm 1\%$ from the calculated value.

The device for resonant excitation of hydrocarbon liquids by the above-mentioned method (**Fig. 1 - 3**) comprises a rotor **11** with a shaft **12** resting on bearings **13** and **14** and equipped with a seal **15**. On the shaft **12** there is installed at least one blade working wheel **2** rigidly connected thereto, made as a disc **16** with a peripheral annular wall **17**. In the wall **17** of the working wheel **2** is made a series of outlet openings **8**, evenly spaced along the circumference, for the discharge of the liquid being treated. The stator **4** has a wall **18** coaxial to the working wheel **2**, an intake opening **3** for the supply of the liquid being treated, communicating with the cavity **1** of the working wheel **2**, and the discharge opening **10** for liquid outflow. The annular chamber **5** for the admission of liquid is limited in the radial direction by the coaxial wall **18** of the stator **4** and the peripheral annular wall **17** of the working wheel **2**. The annular wall **5** communicates with a collecting chamber **5a** and the discharge opening **10** for liquid outflow. In compliance with the principal embodiment of the device the value of the external radius of the peripheral annular wall **17** of the working wheel **2** constitutes

$$R = 2.8477729 \, n^{-2/3} \cdot 10^4 \text{ [mm], where} \tag{3}$$

$n = 14.651908 \, F^3$ [r.p.m.] - the rotation frequency of working wheel **2,**
$F = 63.992420 \, N^{-1/2}$ [kHz] - the basic frequency of resonant excitation,
$N \geq 1$ - the selected integer.

At that the value of the internal radius of the coaxial wall **18** of the stator **4** constitutes

$$R_1 = R + B \, S(2\pi)^{-1} \text{ [mm]}, \tag{4}$$

where

$B \geq 1$ - the selected integer,
$S = 7.2973531$ [mm] - the pitch of outlet openings **8** of the working wheel **2** along the circumference of radius **R**.

The upper boundary of the real range of the reasonable values of the integer **B** is limited by the considerations of the practical expediency and can constitute, for example, B = 20.

In the preferred embodiments of the device the radial extent **L** of the outlet openings **8** of the working wheel **2** is made multiple or more preferably equal to the value **S $(2\pi)^{-1}$.**

In the most preferred embodiment of the device a means for driving the rotor **11,** an electric drive **20** advantageously connected via a coupling **19**, comprises a system controlling the rotation frequency n with a deviation of $\pm1\%$ from its calculated value. As such control system (not shown in the drawings) any suitable system from the well known in the art can be used.

The width of the outlet openings **8** of the working wheel **2** measured in the circular direction of the peripheral surface 6 thereof constitutes preferably half of their circular pitch **S**. Identical shape of the outlet openings **8** of the working wheel **2** extended in parallel to the central axis **9** is preferred.

For solving many practical problems of resonant treatment of hydrocarbon liquids it is sufficient to use a device according to the invention having one working wheel **2**. In case of a difficult to process liquid and/or stringent requirements imposed upon the results of resonant treatment, the rotor **11** can comprise two and more working wheels **2** installed on the common shaft **12** in the ordinary way, which are connected sequentially in the ordinary way in the direction of the liquid flow. In case the increased flow rate of liquid is required, the working wheels **2** installed on the common shaft **12** can be connected in parallel in the direction of the liquid flow in the ordinary way. It is also possible to effect the parallel, sequential or combined connection in the direction of the liquid flow of several autonomous devices according to the invention, both with one and with several working wheels **2**.

The described device for resonant excitation of hydrocarbon liquids operates as follows:

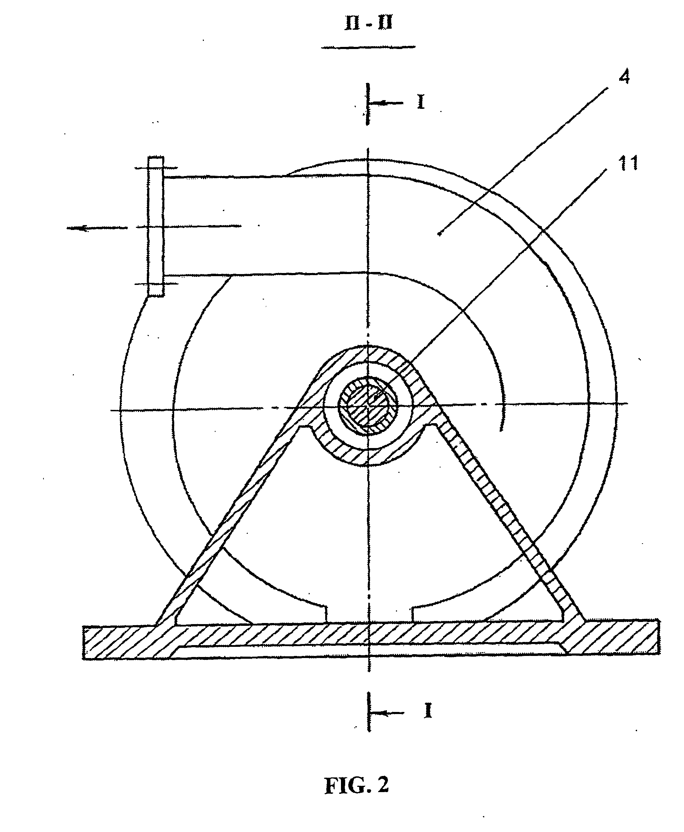

In the device according to the invention (**Fig 1-3**) the rotor **11** with the working wheel **2** is driven by means of the electric motor **20** through the coupling **19** with the preset rotation frequency. The hydrocarbon liquid to be treated is supplied in the direction of the arrow through the intake opening **3** of the stator **4** into the cavity **1** of the working wheel **2** rotating inside the stator **4**. From the cavity **1** of the working wheel **2** liquid under pressure flows through a series of outlet openings **8** and enters the annular chamber **5** between the working wheel **2** and stator **4**. From the annular chamber **5** the treated liquid is let out through the discharge opening **10** of the stator **4** in the direction shown by the arrow (**Fig 2**). The capacity of the device for work is preserved in any spatial position.

The list of the kinds of liquids amenable to treatment covers any natural and artificial liquids, having in their composition bonded hydrogen, primarily hydrocarbon liquids, as well as all kinds of solutions, emulsions, suspensions, etc, prepared on the base thereof in the wide range of viscosity and other physical-chemical properties.

The method of fractionation of hydrocarbon liquids implements the above-described method of resonant treatment thereof according to the invention. This method of fractionation is executed by way of distillation and includes the preliminary treatment of liquid with the help of the pre-installed rotary hydrodynamic source of mechanical oscillations, the supply of preliminarily treated liquid into the fractionating tower and the outflow of distilled and residual fractions. In the principal embodiment of the method of fractionation the preliminary treatment of liquid is effected by way of resonant treatment thereof in compliance with the above-described method of resonant excitation of hydrocarbon liquids according to the invention. In the preferred embodiment of the method of fractionation a partial flow is diverted from the general flow of the liquid to be fractionated and is subjected to said preliminary treatment, after which both flows are combined before feeding them into the fractionating tower. The partial flow can amount to 5...80%, preferably 20...50% from the full flow.

In the most preferred embodiment of the method of fractionation including, along with the known methods, a partial return into the fractionating tower of its own residual fraction, the returned residual fraction is likewise subjected to preliminary treatment by way of resonant excitation according to the indention.

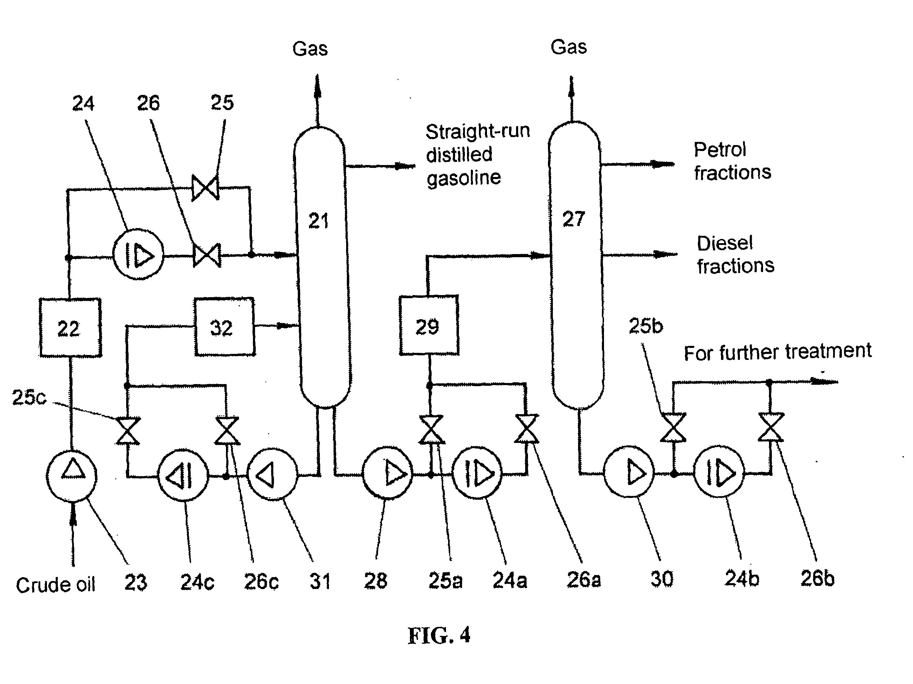

The plant for fractionation of hydrocarbon liquids by way of distillation executes the above-described method of fractionation of hydrocarbon liquids according to the invention. Like the known ones, it comprises (**Fig. 4**) interconnected by pipelines at least one fractionating tower **21**, a heating device **22** for a liquid supplied in the column, a feeding pump **23** and a pre-installed rotary hydrodynamic device **24** for preliminary treatment of liquid. According to the principal embodiment of the plant, the device **24** for preliminary treatment of liquid is made in compliance with one of the above-described embodiments of the device for resonant excitation of hydrocarbon liquids according to the invention. The device **24** for resonant excitation of liquids is sequentially installed between the outlet of the feeding pump **23** and the inlet of the fractionating tower **21**, in this case through the heating device **22**. At such connection the whole flow of liquid passes through the device **24**. In the preferred embodiment of the plant the inlet of the device **24** for resonant excitation of liquid is connected to the inlet of the fractionating tower **21** through a shut-off-control element **25**, with whose help it is possible to control, to a certain extent, the partial flow of liquid passing through the device **24**. In the more preferred embodiment of the plant the outlet of the device **24** is connected to the inlet of the fractionating tower **21** through a shut-off-control element **26**. With the help of both shut-off-control elements **25** and **26** it is possible to control more exactly the partial flow of liquid passing through the device **24** in compliance with the required technological parameters of fractionation.

If the second atmospheric fractionating tower **27** is provided in the particular plant for fractionation of hydrocarbon liquids, the second similar device **24a** can be used for resonant excitation of liquid. In this case the device **24a** is sequentially installed between the outlet of a pump **28**, feeding residual fraction (stripped oil) from the first tower **21** to the second tower **27**, and the inlet of the tower **27**, in this case through the second heating device **29**. The shut-off-control elements **25a** and **26a** perform similar functions.

If the third vacuum fractionating tower is provided in the particular plant for fractionation of hydrocarbon liquids, or any known technological equipment for further treatment of residual fraction (not shown in the drawings), the third similar device **24b** may likewise be used for resonant excitation of residual fraction after the second tower **27**. In this case the device **24b** is installed after a pump **30**, feeding the residual fraction (residual fuel oil) from the second tower **27** for further treatment. The shut-off-control elements **25b** and **26b** perform similar functions.

According to the most preferred embodiment, in the plant for fractionation, comprising, along with the known ones, a loop for a partial return into the fractionating tower of its own residual fraction, including a sequentially installed feeding pump **31** and the third heating device **32** interconnected by pipelines, one more similar device **24c** is sequentially installed in the loop of the partial return of residual fraction for resonant excitation of the residual fraction being returned after the first tower **21**. In the example presented in **Fig. 4** the device **24c** is installed between the outlet of the feeding pump **31** and the heating device **32**. The shut-off-control elements **25c** and **26c** perform similar functions.

The operation and service of the described plant for fractionation of hydrocarbon liquids are effected in the ordinary way arid differ in comparison with the usual plants of this type only in respect of the control of said shut-off-control elements, which can be performed both manually and in the ordinary way automatically in compliance with the preset technological program.

Below is given a concrete example of the practical embodiment of the present invention on the acting oil refining plant, comprising two atmospheric fractionating towers with the use of one device for resonant treatment of hydrocarbon liquids, installed ahead of the first fractionating tower (see Table).

Table.

| Example of Invention Embodiment with Reference to Heavy Crude Oil of Tatarstan Fields (Russia). | | | | |
|---|---|---|---|---|
| No. | Parameter | Symbol | Unit | Value |
| 1 | Frequency of resonant excitation of liquid | F | kHz | 5.841 |
| 2 | Nominal rotation frequency of the working wheel | N | r.p.m. | 2920 |
| 3 | Radius of peripheral surface of the working wheel | R | mm | $139.36_{-0.08}$ |
| 4 | Circular pitch of outlet openings of the working wheel along circumference of radius **R** | S | mm | 7.297 |
| 5 | Width of outlet openings of the working wheel | - | mm | 3.64 |
| 6 | Radial extent of outlet openings of the working wheel | - | mm | 7.30 |
| 7 | Radius of coaxial surface of the stator | $R_1$ | mm | $140.52^{+0.08}$ |

Table.   (continued)

| No. | Parameter | Symbol | Unit | Value |
|---|---|---|---|---|
| Example of Invention Embodiment with Reference to Heavy Crude Oil of Tatarstan Fields (Russia). | | | | |
| 8 | Power rating of drive motor | - | kW | 15 |
| 9 | Total flow rate of liquid | - | $m^3/h$ | 8.2 |
| 10 | Flow rate of liquid through the device for resonant treatment | - | $m^3/h$ | 2.2 |
| 11 | Yield of petrol fractions (Same in customary mode) | - | % % | 9.14 (5.78) |
| 12 | Relative increase of yield of petrol fractions, as compared with customary mode | - | % | 58.13 |
| 13 | Yield of diesel fractions (Same in customary mode) | - | % % | 36.77 (24.72) |
| 14 | Relative increase of yield of diesel fractions, as compared with customary mode | - | % | 48.75 |
| 15 | Yield of fuel oil (Same in customary mode) | - | % % | 55.30 (68.41) |
| 16 | Relative decrease of yield of fuel oil, as compared with customary mode | - | % | 19.16 |

## Claims

1. A method of resonant excitation of liquids, having in their composition bonded hydrogen, by way of oscillatory influence on liquid for destructive transformation of the chemical bonds thereof at the molecular level, comprising the transfer of oscillatory energy to liquid with the help of a source of mechanical oscillations placed into liquid, *characterized* **in that** resonant excitation of liquid is effected on one of the basic frequencies, obeying by the common relationship

$$F = F_1 N^{-1/2},$$

where

**N ≥ 1** - the selected integer,
**$F_1$ = 63.992420** [kHz] - the basic oscillation frequency at **N = 1.**

2. The method of resonant excitation of hydrocarbon liquids of claim **1** with the help of a rotary hydrodynamic source of mechanical oscillations, comprising

(a) supply of the liquid to be treated into a cavity (1) of a working wheel (2) rotating inside a stator (4),
(b) discharge of liquid from the cavity (1) of the working wheel (2) through a series of outlet openings (8), evenly spaced along a peripheral surface (6) thereof, at that
(c) said discharge of liquid is effected into an annular chamber (5) limited by. the peripheral surface (6) of the working wheel (2) and an internal coaxial surface (7) of the stator (4), and
(d) outflow of liquid from the annular chamber (5),

*characterized* **in that** resonant excitation of liquid is effected abiding by the relationship

$$n R = 1.16141 F,$$

where

**n** [1/s] - the rotation frequency of the working wheel,

**R** [m] - the radius of the peripheral surface of the working wheel.

3. The method of claim 2, *characterized* in that the rotation frequency of the working wheel is maintained constant with a deviation from the calculated value of ±1%.

4. A device for resonant excitation of hydrocarbon liquids with the help of a rotary hydrodynamic source of mechanical oscillations, comprising

(a) a rotor (11) including a shaft (12) resting on bearings and at least one working wheel (2) installed on the shaft (12), at that
(b) the working wheel (2) is made as a disc (16) with a peripheral annular wall (17), wherein a series of outlet openings (8) for liquid evenly spaced along the circumference is made,
(c) a stator (4), having a wall (18) coaxial to the working wheel, an intake opening (3) for the supply of liquid, communicating with a cavity (1) of the working wheel (2), and a discharge opening (10) for outflow of liquid,
(d) an annular chamber (5) formed by the coaxial wall (18) of the stator (4) and peripheral annular wall (17) of the working wheel (2) and communicating with the discharge opening (10) of the stator (4), and
(e) a means (20) for driving the rotor (11) with the preset rotation frequency,

*characterized* in that the value of the external radius of the peripheral annular wall (17) of the working wheel (2) constitutes

$$R = 2.8477729\, n^{-2/3} \cdot 10^4 \text{ [mm]},$$

where

$n = 14.651908\, F^3$ [r.p.m.] - the rotation frequency of the working wheel,
$F = 63.992420\, N^{-1/2}$ [kHz] - the basic frequency of resonant excitation,
$N \geq 1$ - the selected integer,

while the value of the internal radius of the coaxial wall (18) of the stator (4) constitutes

$$R_1 = R + B\, S(2\pi)^{-1} \text{ [mm]},$$

where

$B \geq 1$ - the selected integer,
$S = 7.2973531$ [mm] - the pitch of outlet openings of the working wheel along the circumference of the radius **R**.

5. The device of claim 4, *characterized* in that the radial extent of the outlet openings (8) of the working wheel (2) is made multiple to the value $S\,(2\pi)^{-1}$.

6. The device of claim 5, *characterized* in that the radial extent of the outlet openings (8) of the working wheel (2) is made equal to the value $S\,(2\pi)^{-1}$.

7. The device of one of claims 4 - 6, *characterized* in that the means (20) for driving the rotor (11) comprises a system for controlling the rotation frequency thereof with a deviation of ±1% from the calculated value thereof.

8. A method of fractionation of hydrocarbon liquids by way of distillation, comprising preliminary treatment of liquid with the help of a pre-installed rotary hydrodynamic source of mechanical oscillations, the supply, of preliminarily treated liquid into a fractionating tower and the outflow of distilled and residual fractions, *characterized* in that preliminary treatment of liquid is effected by resonant excitation thereof according to the method of claim 2 or 3.

9. The method of fractionation of claim 8, *characterized* in that from the general flow of the liquid to be fractionated a partial flow is diverted, subjected to said preliminary treatment, following which both flows are combined before feeding into the fractionating tower.

**10.** The method of fractionation of claim 9, *characterized* **in that** the partial flow amounts to 5...80% from the full flow.

**11.** The method of fractionation of claim 10, *characterized* **in that** the partial flow amounts to 20...50% from the full flow.

**12.** The method of fractionation of one of claims 8 - 11, comprising a partial return into the fractionating tower of its own residual fraction, *characterized* **in that** the returned residual fraction is subjected to said preliminary treatment by way of resonant excitation.

**13.** A plant for fractionation of hydrocarbon liquids by way of distillation, comprising interconnected by pipelines a feeding pump (23), at least one fractionating tower (21) and a pre-installed rotary hydrodynamic device for the preliminary treatment of liquid, *characterized* **in that** said device for the preliminary treatment of liquid is made as a device (24) for resonant excitation of liquid of one of claims 4 - 7* and is sequentially installed between the outlet of the feeding pump (23) and the inlet of the fractionating tower (21).

**14.** The plant of claim 13, *characterized* **in that** the inlet of the device (24) for resonant excitation of liquid is connected to the inlet of the fractionating tower (21) through a shut-off-control element (25).

**15.** The plant of claim 14, *characterized* **in that** the outlet of the device (24) for resonant excitation of liquid is connected to the inlet of the fractionating tower (21) through a second shut-off-control element (26).

**16.** The plant of one of claims 13-15 with a loop of the partial return into the fractionating tower (21) of its own residual fraction, comprising a feeding pump (31) and a heating device (32) sequentially interconnected by pipelines, *characterized* **in that** into said loop of the partial return of residual fraction there is sequentially installed the second said device (24c) for resonant excitation of liquid.

* The reference to preceding claims does not mean any dependence on them and is given for mere abridgement of the description.

FIG. 1

II - II

FIG. 2

## III - III

FIG. 3

FIG. 4

Gas

Straight-run distilled gasoline

Gas

Petrol fractions

Diesel fractions

For further treatment

24  26  25

25c

21

22  32

29

27

25b

Crude oil  23  24c  26c  31  28  25a  24a  26a  30  24b  26b

EP 1 260 266 A1

## INTERNATIONAL SEARCH REPORT

| | International application No. |
|---|---|
| | PCT/RU 00/00097 |

**A. CLASSIFICATION OF SUBJECT MATTER**

IPC 7 B01J 19/00, 19/10, C10G 7/00, 7/02, B01D 3/14

According to International Patent Classification (IPC) or to both national classification and IPC

**B. FIELDS SEARCHED**

Minimum documentation searched (classification system followed by classification symbols)

IPC 7 B01J 19/00, 19/10, 19/18, C10G 7/00, 7/02, 7/06, 15/08, 32/00, B01D 3/00, 3/08, 3/30, 3/14, G10K 9/10, 11/00

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X, E | RU 2149886 C1 (BYKOV IGOR NIKOLAEVICH ) 27 May 2000 (27.05.00) the whole document | 1 |
| A | WO 96/33011 A1 (SELIVANOV NIKOLAI IVANOVICH) 24 October 1996 (24.10.96) | 1-16 |
| A | RU 2102434 C1 (DOCHERNEE AKTSIONERNOE OBSCHESTVO "LUKOIL-VNP" et al) 20 January 1998 (20.01.98) | 1-16 |
| A | RU 2087518 C1 (JUR GENNADY SERGEEVICH) 20 August 1997 (20.08.97) | 1-16 |
| A | RU 2102435 C1 (OTKRYTOE AKTSIONERNOE OBSCHESTVO "SLAVNEFT-YAROSLAV-NEFTEORGSINTEZ ") 20 January 1998 (20.01.98) | 1-16 |
| A | WO 87/00547 A1 (RUHRGAS AKTIENGESELLSCHAFT) 29 January 1987 (29.01.87) | 1-16 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 September 2000 (26.09.2000) | 2 November 2000 (02.11.00) |

| Name and mailing address of the ISA/ RU | Authorized officer |
|---|---|
| Facsimile No. | Telephone No. |

Form PCT/ISA/210 (second sheet) (July 1992)